# EUROPEAN PATENT APPLICATION

(11) **EP 3 825 047 A1**
(43) Date of publication of application: **26.05.2021**
(21) Application number: 19210459.4
(22) Date of filing: 20.11.2019
(51) Int. Cl.: B23B 31/26, B23B 31/30

(54) **CLAMPING DEVICE FOR TOOL HOLDER**

(71) Applicant: AB Sandvik Coromant, 811 81 Sandviken (SE)
(72) Inventor: MÄTLIK, Gunnar, 802 80 Gävle (SE)
(74) Representative: Sandvik

(57) **Abstract**

A clamping device for releasably holding a tool holder shank (61), comprising:
- a spindle (2) rotatably mounted inside a housing (3);
- a drawbar (8) axially moveable in a bore (5) in the housing between an advanced releasing position and a retracted locking position;
- engagement members (20) moveable under the effect of the drawbar into locking engagement with the tool holder shank;
- an actuating member (13) slidably mounted to the spindle;
- a motion transferring mechanism (30) for transferring an axial movement of the actuating member into a movement of the drawbar; and
- a hydraulically operated annular piston member (50) for moving the actuating member (13) in relation to the spindle.

The piston member extends around the spindle. The actuating member is rotatable in relation to the piston member together with the spindle.

## Description

### FIELD OF THE INVENTION AND PRIOR ART

The present invention relates to a clamping device according to the preamble of claim 1, which is intended to be used for connecting a tool holder to a machine tool.

Within the field of machine tools for metal cutting, the cutting tools, for instance in the form of drills or milling tools, used for machining work pieces of metallic material are often fixed to and rotated together with a tool holder, which in its turn may be detachably clamped to a rotatable spindle of the machine tool in order to be rotated together with the spindle. It is previously know to clamp a shank of such a tool holder to a rotatable spindle by means of a clamping mechanism arranged in the spindle. When the cutting tool needs to be exchanged, the tool holder is released from the spindle and a new tool holder with another cutting tool is clamped to the spindle.

A clamping device comprising a spindle with a clamping mechanism adapted for an automatic tool changing operation is previously known from EP 1 468 767 B1. In the clamping device according to EP 1 468 767 B1, an actuating member in the form of a first drawbar is slidably mounted inside the spindle and configured to effect an axial displacement of a second drawbar via a force amplifying mechanism comprising a number of co-operating wedges arranged between the drawbars. A gas spring inside the spindle is configured to urge the two drawbars into a retracted locking position, in which a tool holder is clamped to the spindle, and a hydraulic piston may be configured to act on a piston at the rear end of the gas spring in order to achieve a displacement of the two drawbars into an advanced releasing position, in which the tool holder may be released from the spindle. However, this previously known clamping device has a relatively long axial extent and it is therefore not suitable to use this type of clamping device when tool holders are to be detachably fixed at the periphery of a tool turret where the available axial space for the clamping device is limited.

### OBJECT OF THE INVENTION

The object of the present invention is to provide a clamping device of the above-mentioned type that has a new and favourable design and that is suitable for use with a tool turret of a machine tool.

### SUMMARY OF THE INVENTION

According to the invention, said object is achieved by means of a clamping device having the features defined in claim 1.

The clamping device according to the invention comprises:
- a housing;
- a spindle rotatably mounted inside the housing and having a front end, a rear end and a bore which intersects the front end and extends rearwardly therefrom, wherein a mounting portion for receiving the tool holder shank is provided at a front end of the bore;
- a drawbar slidably mounted inside the bore so as to be reciprocally moveable in the bore along a longitudinal axis thereof between an advanced releasing position and a retracted locking position;
- engagement members arranged around the drawbar at a front end thereof, wherein the engagement members, under the effect of a movement of the drawbar from the advanced releasing position to the retracted locking position, are moveable from a first position, in which the engagement members allow the tool holder shank to move into and out of said mounting portion of the bore, to a second position, in which the engagement members are in locking engagement with the tool holder shank and keep it secured to the spindle;
- an actuating member arranged inside the housing, wherein the actuating member is slidably mounted to the spindle so as to be moveable in relation to the spindle in the axial direction thereof;
- a motion transferring mechanism arranged inside the housing, wherein the motion transferring mechanism is mounted to the spindle and configured to transfer an axial movement of the actuating member in a first axial direction in relation to the spindle into a movement of the drawbar from the advanced releasing position to the retracted locking position; and
- a hydraulically operated annular piston member for moving the actuating member axially in relation to the spindle, the piston member extending around the spindle, wherein the piston member is slidably mounted in a space inside the housing so as to be hydraulically moveable axially in relation to the housing in order to allow the piston member to exert a pulling or pushing force on the actuating member in said first axial direction and thereby effect a movement of the drawbar from the advanced releasing position to the retracted locking position.

By using the above-mentioned actuating member for controlling the axial movement of the drawbar, no gas spring or the similar that takes up a lot of space in the axial direction is required for controlling the axial movement of the drawbar, which implies that the clamping device can be made compact in axial direction. The clamping device is therefore suitable for use in tool turrets.

According to the invention, the actuating member is rotatable in relation to the piston member together with the spindle, which implies that the piston member and all the parts of the hydraulic system connected to the piston member may remain stationary during the machining operations when the tool holder is rotated together with the spindle. By avoiding rotating parts in the hydraulic system used for moving the actuating member in connection with an automatic tool changing operation, the construction of this hydraulic system is facilitated and no rotary seals that would limit the possible rotational speed of the spindle are required at the interface between the housing and the spindle. The use of a hydraulically operated piston member for moving the actuating member, and thereby achieving a movement of the drawbar, implies that the clamping device according to the invention is suitable for use in automatic tool changing operations.

The clamping device according to the present invention may be mounted to a tool turret of a machine tool, wherein the rotatable spindle of the clamping device is connected or connectable to a drive mechanism in the tool turret. However, the clamping device is not limited to use in a tool turret. On the contrary, the rotatable spindle of the clamping device could constitute the main spindle of a machine tool or be connected to such a main spindle without any intermediate tool turret.

According to an embodiment of the invention, the actuating member is configured to assume a self-locking axial position on the spindle when the drawbar has been forced into the retracted locking position under the effect of the actuating member and the motion transferring mechanism, so as to thereby keep the drawbar in the retracted locking position. Hereby, the actuating member is capable of keeping the drawbar in the retracted locking position during rotation of the spindle without requiring any external force from the piston member, which implies that the piston member only needs to exert a pulling or pushing force on the actuating member in connection with a tool changing operation when the spindle and the actuating member are in a stationary position. Hereby, frictional forces between the actuating member and the piston member during rotation of the spindle may be avoided or at least reduced to a very low level.

According to another embodiment of the invention, the piston member comprises an annular piston head slidably received in a space in the housing, wherein a first hydraulic chamber is formed in this space on a first side of the piston head, the piston member being moveable in said first axial direction by feeding of hydraulic fluid into this first hydraulic chamber. The piston member may hereby be incorporated in the housing in a space-saving manner.

According to another embodiment of the invention, a second hydraulic chamber is formed in said space on an opposite second side of the piston head, the piston member being moveable in a second axial direction, opposite to the first axial direction, by feeding of hydraulic fluid into the second hydraulic chamber. A double-acting piston member is hereby achieved and one and the same piston member may consequently be used for moving the actuating member in the first axial direction when the drawbar is to be moved from the advanced releasing position to the retracted locking position and for moving the actuating member in the opposite direction when the drawbar is to be moved from the retracted locking position to the advanced releasing position, which in its turn implies that the clamping device can be made very compact.

According to another embodiment of the invention, the piston member comprises a sleeve-shaped piston stem fixed to the piston head, wherein the piston member is configured to exert said pulling or pushing force on the actuating member through the piston stem. The piston stem is with advantage configured to delimit the first hydraulic chamber in radial direction inwards.

According to another embodiment of the invention, the actuating member has the form of a sleeve, wherein the actuating member is arranged around a peripheral wall of the spindle and slidably mounted to this peripheral wall so as to be axially moveable in relation to the spindle.

According to another embodiment of the invention, an annular external protuberance is provided on the outer side of the actuating member, wherein the piston stem is configured to exert said pulling or pushing force on the actuating member by acting on this external protuberance. Hereby, a connection between the piston member and the actuating member may be achieved in a simple and reliable manner during a tool changing operation.

Another embodiment of the invention is characterized in:
- that an annular internal protuberance is provided on the inner side of the piston stem;
- that a lock ring is fixed to the piston stem on the inner side thereof, wherein the lock ring and the internal protuberance are spaced apart in the axial direction of the piston stem; and
- that the external protuberance on the actuating member is received with play in a gap formed between the internal protuberance and the lock ring.

Hereby, the piston member may be kept in place in axial direction in relation to the actuating member in a simple manner during the rotation of the spindle without any direct contact between the piston member and the actuating member and with minimal friction between them. As an alternative, a rolling bearing, preferably in the form of a ball bearing, may be arranged between the actuating member and the piston member.

Another embodiment of the invention is characterized in:
- that the motion transferring mechanism comprises two or more wedges spaced apart in the circumferential direction of the spindle, each wedge being received in a respective aperture that extends radially through said peripheral wall of the spindle, wherein the wedges are configured to press the drawbar towards the retracted locking position when they are pressed radially inwards in the associated apertures;
- that each wedge comprises a first pressure receiving surface which faces outwards from the spindle;
- that the actuating member on its inner side is provided with a first pressure applying surface which faces inwards for contacting the first pressure receiving surface on each wedge, the first pressure applying surface having a radial distance to the longitudinal axis that increases as seen in said first axial direction; and
- that the first pressure applying surface is configured to press each wedge radially inwards in the associated aperture by pressing against the first pressure receiving surface on each wedge when the actuating member is moved in said first axial direction.

Since the first pressure applying surface has a radial distance to the longitudinal axis that increases in the first axial direction, a movement of the actuating member in the first axial direction will cause a pressure to be applied by the first pressure applying surface on the first pressure receiving surface of each wedge. This pressure will have a component in the radial direction such that each wedge is pressed radially inwards towards the longitudinal axis.

According to another embodiment of the invention, the first pressure applying surface and the first pressure receiving surfaces are inclined in relation to the longitudinal axis by such an angle α that the wedges will keep the actuating member in a self-locking axial position on the spindle when the drawbar has been forced into the retracted locking position under the effect of the actuating member and the wedges. In this case, the first pressure applying surface and the first pressure receiving surface both extend in the same direction when viewed in a longitudinal section through the spindle. The angle α is chosen so as to be below a self-lock threshold angle, such that the actuating member attains a self-locking axial position in relation to the wedges when the drawbar has been displaced inside the bore into the retracted locking position. To obtain a self-locking axial position, the angle α should be sufficiently small, i.e. below the self-lock threshold angle. A self-locking axial position refers to an axial position in which the static frictional force between the first pressure receiving surface of each wedge and the first pressure applying surface of the actuating member is greater than the opposing force in the plane of friction that is caused by a force applied to the wedges in a radial direction perpendicular to the longitudinal axis. Hence, a self-locking axial position is obtained within an angular range that depends on the coefficient of friction between the first pressure receiving surface of each wedge and the first pressure applying surface of the actuating member. This coefficient of friction depends on various parameters, such as the materials used, coatings on the surfaces, use of lubricants, etc. Hence, the self-lock threshold angle is dependent on such parameters. A person skilled in the art will be able to identify the self-lock threshold angle that apply in each specific case by using common general knowledge and/or routine experiments, or at least predict or assess whether a certain angle is below such a self-lock threshold angle. In general, it is preferred to choose an angle α that is well below the self-lock threshold angle, to thereby ensure a self-locking configuration. A further benefit of using a small angle α is that a force-amplifying effect is achieved, owing to the fact that a small angle α implies that a relatively long axial displacement of the actuating member will result in a relatively short axial displacement of the drawbar. However, a too small angle α may be inefficient and not practically well-functioning. For example, a very small angle α may render it difficult to release the actuating member from the self-locking axial position. The angle α is with advantage between 2° and 10°. With an angle α within this range, a self-locking effect as well as an appropriate force-amplifying effect may be achieved.

Another embodiment of the invention is characterized in:
- that each wedge comprises a second pressure receiving surface which faces outwards from the spindle;
- that the actuating member on its inner side is provided with a second pressure applying surface which faces inwards for contacting the second pressure receiving surface on each wedge, the second pressure applying surface having a radial distance to the longitudinal axis that increases as seen in said first axial direction;
- that the second pressure applying surface and the second pressure receiving surfaces are inclined in relation to the longitudinal axis by an angle β which is larger than the angle α; and
- that the first and second pressure applying surfaces and the first and second pressure receiving surfaces are arranged consecutively on the actuating member and on each wedge, respectively, such that, upon a movement of the actuating member in the first axial direction, the second pressure applying surface is configured to slide and press against the second pressure receiving surface on each wedge during a first phase of the movement and the first pressure applying surface is configured to slide and press against the first pressure receiving surface on each wedge during a subsequent second phase of the movement.

Hereby, the drawbar may be quickly moved in axial direction during the initial phase of the clamping under the effect of the larger angle β. This initial clamping phase does not require much force. However, during the final phase of the clamping, a great force is required for displacing the drawbar a short distance. When the actual clamping occurs, i.e. when the engagement members assume the above-mentioned first position, the drawbar is moved in axial direction under the effect of the smaller angle α such that the axial movement of the drawbar will be small as compared to the axial movement of the actuating member, which results in a force-amplifying effect, also referred to as "power boost". The angle β is suitably between 10° and 75°, preferably between 35° and 65°, which provides an efficient initial axial movement of the drawbar. By using a steep angle β for the initial axial movement of the drawbar and a small angle α for the actual clamping, the actuating member (and thus the entire clamping device) can be made relatively short in the axial direction while still providing a self-locking clamping mechanism with a significant force-amplifying effect.

According to another embodiment of the invention, the drawbar is, under the effect of the actuating member and the motion transferring mechanism, moveable from the advanced releasing position to the retracted locking position against the action of a spring force from a release spring arranged inside the spindle. Thus, the release spring is configured to move the drawbar towards the advanced releasing position when the actuating member is moved in a second axial direction opposite to the first axial direction. The release spring may ensure that the drawbar is pushed towards advanced releasing position immediately when the actuating member is moved in said second axial direction. The release spring may also ensure that the different components of the motion transferring mechanism are always maintained under a certain axial pressure and thereby are kept in close contact with each other and in proper positions in relation to each other and in relation to the actuating member and the drawbar.

Further advantageous features of the clamping device according to the present invention will appear from the description following below and the dependent claims.

### BRIEF DESCRIPTION OF THE DRAWING

With reference to the appended drawing, a specific description of embodiments of the invention cited as examples follows below. In the drawings:
- Fig 1: is a longitudinal section through a clamping device according to an embodiment of the present invention and a tool holder, with the drawbar of the clamping device shown in a retracted locking position,
- Fig 2: is a longitudinal section corresponding to Fig 1, with the drawbar shown in an advanced releasing position,
- Fig 3: is an exploded view of the clamping device and tool holder of Fig 1,
- Fig 4: is an exploded view from another direction of the clamping device and tool holder of Fig 1,
- Fig 5: is a lateral view of a parts included in the clamping device of Fig 1, with a tool holder clamped to the spindle of the clamping device,
- Fig 6: is a partly cut perspective view of the parts of the clamping device shown in Fig 5,
- Fig 7: is a longitudinal section through the tool holder and the parts of the clamping device shown in Fig 5, with the tool holder clamped to the spindle,
- Fig 8: is a planar view from above of the tool holder and the parts of the clamping device shown in Fig 5, but with the actuating member removed from the spindle,
- Fig 9: is a partly cut perspective view of the tool holder and the parts of the clamping device shown in Fig 5, with the tool holder detached from the spindle,
- Fig 10: is a lateral view of the tool holder and the parts of the clamping device shown in Fig 5, with the tool holder in an unclamped state,
- Fig. 11: is a longitudinal section through the tool holder and the parts of the clamping device shown in Fig 5, with the tool holder in an unclamped state,
- Fig. 12: is a cross-section according to the line XII-XII in Fig 10,
- Fig 13: is a partly cut lateral view of parts included a clamping device according to an alternative embodiment of the invention,
- Fig 14: is a schematic partly cut lateral view of a clamping device according to another embodiment of the invention, and
- Fig 15: is a cross-section according to the line XV-XV in Fig 14.

### DETAILED DESCRIPTION OF EMBODIMENTS OF THE INVENTION

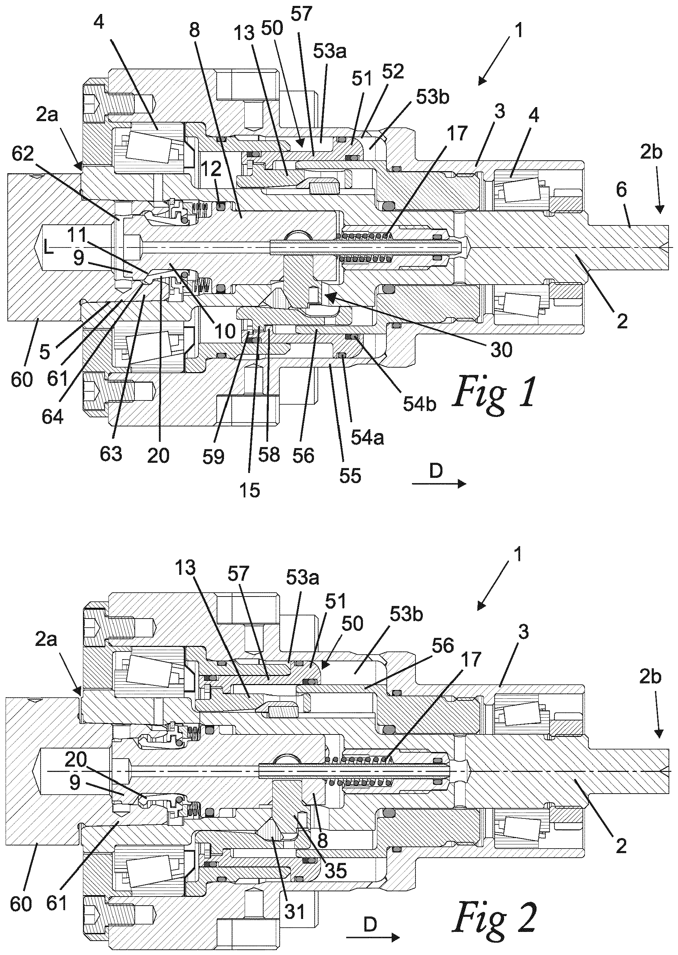

A clamping device 1 according to an embodiment of the present invention is illustrated in Figs 1 and 2 in a longitudinal section through the longitudinal axis thereof. The clamping device 1 is configured to releasably clamp a tool holder 60 (very schematically illustrated in the drawings) to a rotatable spindle 2 in the clamping device and enable the machining of a work piece by means of a cutting tool (not shown) fixed to the tool holder 60.

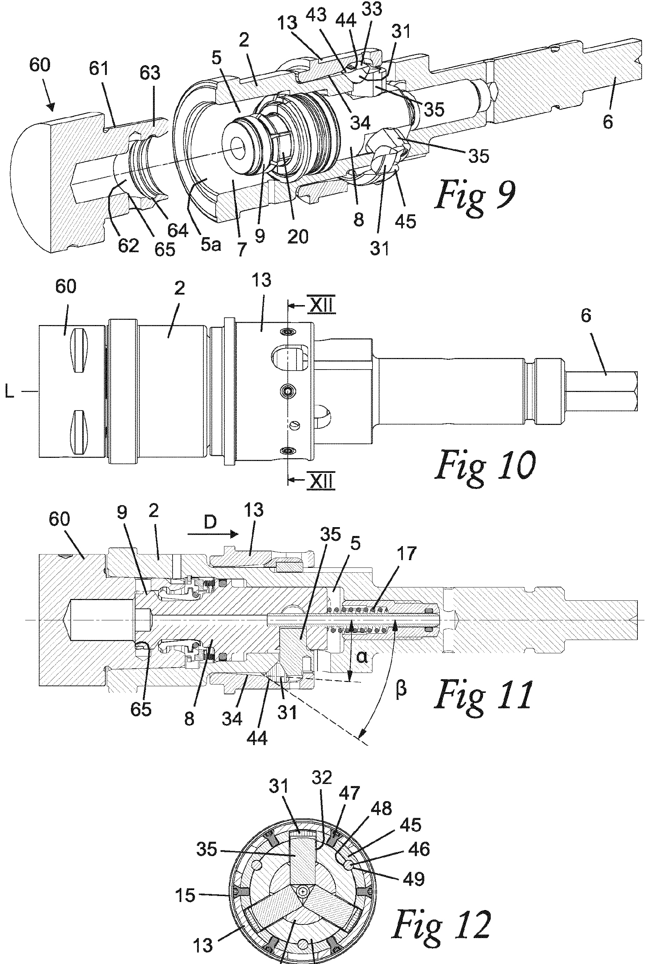

The spindle 2 is rotatably mounted to a housing 3 of the clamping device 1 by means of rolling bearings 4, for instance in the form of tapered roller bearings or any other suitable type of roller bearings. The spindle 2 has a front end 2a, a rear end 2b and a bore 5 which intersects the front end 2a and extends rearwardly therefrom. Thus, the bore 5 has an entrance opening 5a (see Fig 9) at the front end 2a of the spindle. The spindle 2 is connectable to a drive mechanism of a machine tool, for instance a drive mechanism in a tool turret of a machine tool, via a connection pin 6 at the rear end 2b of the spindle in order to allow the spindle to be driven in rotation by the drive mechanism.

A mounting portion 7 (see Fig 9) for receiving a mounting shank 61 on the tool holder 60 is provided at a front end of the bore 5. This mounting shank 61 is here referred to as tool holder shank.

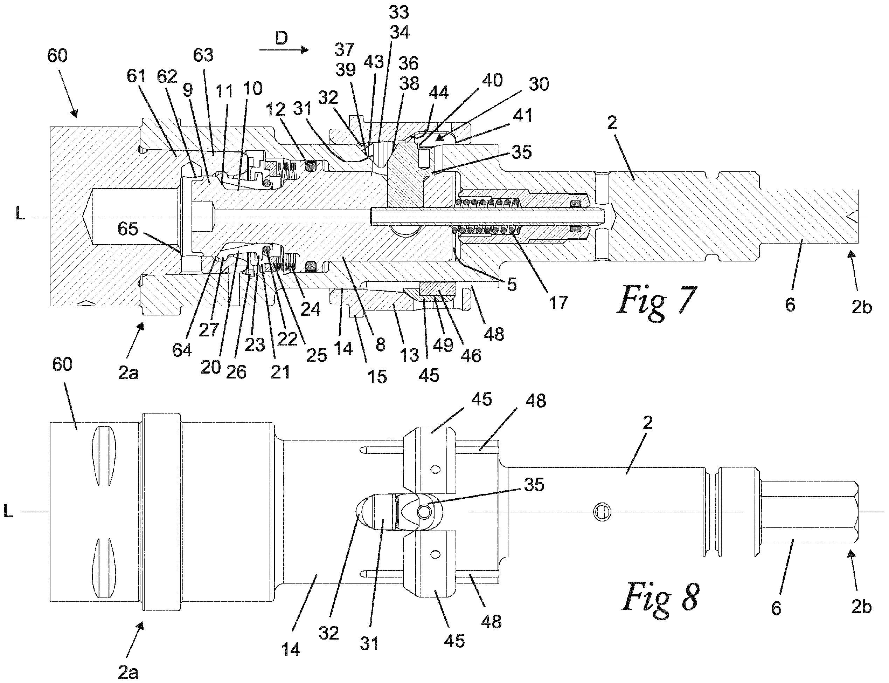

A drawbar 8 is slidably mounted inside the bore 5 so as to be reciprocally moveable in the bore 5 along a longitudinal axis L thereof between an advanced releasing position (see Figs 2 and 11) and a retracted locking position (see Figs 1 and 7). The drawbar 8 has a front end facing the entrance opening 5a of the bore 5 and an opposite rear end. A head portion 9 and a neck portion 10 are provided at the front end of the drawbar 8. The head portion 9 is located in front of the neck portion 10 as seen in the longitudinal direction of the drawbar, wherein the head portion 9 is connected to the neck portion 10 via a rearwardly facing bevelled surface 11 on the head portion 9. A sealing ring 12 is arranged between the drawbar 8 and an inner surface of the bore 5. In the illustrated example, this sealing ring 12 is received in a groove on the outer side of the drawbar 8.

The tool holder shank 61 is insertable into the mounting portion of the bore 5 via the entrance opening 5a at the front end 2a of the spindle 2. The head portion 9 of the drawbar is received in an engagement bore 62 in the tool holder shank 61 and a tubular wall 63 of the tool holder shank is received in a space between the head portion 9 and an inner surface of the bore 5. In the illustrated embodiments, the mounting portion 7 of the bore 5 is conically shaped and has a somewhat "triangular" or polygonal, non-circular cross-sectional shape adapted to receive a similarly shaped tool holder shank 61. The conical shape ensures a connection free from play in the radial as well as the axial direction between the tool holder shank 61 and the spindle 2, whereas the non-circular cross-section ensures a non-rotatable fixation of the tool holder shank 61 to the spindle 2. However, the mounting portion of the bore 5 could also have any other suitable shape for receiving other types of tool holder shanks.

Engagement members 20 in the form of segments are arranged around the drawbar 8 at a front end thereof. Under the effect of a movement of the drawbar 8 from the advanced releasing position to the retracted locking position, the engagement members 20 are moveable from a first position (see Figs 2 and 11), in which the engagement members 20 allow the tool holder shank 61 to move into and out of the mounting portion of the bore 5, to a second position (see Figs 1 and 7), in which the engagement members 20 are in locking engagement with an engagement groove 64 in the engagement bore 62 in the tool holder shank 61 and thereby keep the tool holder shank 61 secured to the spindle 2.

In the illustrated embodiments, the engagement members 20 are arranged around the neck portion 10 of the drawbar 8 and held in place around the neck portion by means of a retainer ring 21 (see Fig 7) and an elastic O-ring 22, which are arranged in the bore 5 and surround the neck portion 10. Each engagement member 20 has an outwardly facing flange portion 23 engaged in an inner groove in the retainer ring 21. The O-ring 22 is received in an outwardly facing groove at the rear end of each engagement member 20. A compression spring 24, a thrust ring 25 and a stop ring 26 are also arranged in the bore 5 and configured to surround the drawbar 8. The compression spring 24 is mounted between a shoulder on the drawbar 8 and the thrust ring 25 and it is configured to urge the thrust ring 25, the retainer ring 21 and the engagement members 20 forwards. The forward movement of the retainer ring 21 towards the entrance opening of the bore 5 is limited by the stop ring 26, which is mounted in a groove in an inner surface of the bore 5.

At its front end, each engagement member 20 is provided with an outwardly directed engagement flange 27, which is configured to be in engagement with the engagement groove 64 in the tool holder shank 61 when the engagement member 20 is in the above-mentioned second position. When the drawbar 8 is in the advanced releasing position, the front ends of the engagement members 20 are located behind the head portion 9 of the drawbar 8 and the engagement flanges 27 are out of engagement with the engagement groove 64 in the tool holder shank 61, as illustrated in Figs 2 and 11. When the drawbar 8 is moved axially rearwards in the bore 5 along the longitudinal axis L thereof, the bevelled surface 11 on the head portion 9 of the drawbar will come into contact with the front ends of the engagement members 20, wherein the front ends of the engagement members 20 will slide on this bevelled surface 11 and be pressed outwards so that the engagement flanges 27 on the engagement members come into engagement with the engagement groove 64 in the tool holder shank 61, whereupon the tool holder shank 61 will be pulled by the drawbar 8 into firm contact with inner surfaces of the spindle 2 within the mounting portion of the bore 5.

The clamping device 1 further comprises an actuating member 13, which is concentric with the spindle 2 and slidably mounted to the spindle so as to be axially moveable in relation to the spindle 2 along the longitudinal axis L. The actuating member 13 is non-rotatably mounted to the spindle 2, i.e. prevented from rotating in relation to the spindle 2, and consequently configured to rotate together with the spindle 2. A motion transferring mechanism 30 is mounted to the spindle 2 and configured to transfer an axial movement of the actuating member 13 in a first axial direction D in relation to the spindle 2 into a movement of the drawbar 8 from the advanced releasing position to the retracted locking position. In the illustrated embodiments, this first axial direction D is a direction towards the rear end 2b of the spindle 2. Thus, in this case a movement of the drawbar 8 from the advanced releasing position to the retracted locking position is effected by an axial movement of the actuating member 13 rearwards along the spindle 2. However, as an alternative, the actuating member 13 and the motion transferring mechanism 30 could be arranged to co-operate in such a manner that a movement of the drawbar 8 from the advanced releasing position to the retracted locking position is effected by an axial movement of the actuating member 13 forwards along the spindle 2.

Furthermore, the clamping device 1 comprises a hydraulically operated annular piston member 50 for moving the actuating member 13 axially in relation to the spindle 2. The piston member 50 is configured to surround a part of the spindle 2. The piston member 50 is slidably mounted to the housing 3 so as to be hydraulically moveable axially in relation to the housing in order to move the actuating member 13 in relation to the spindle 2 in the above-mentioned first axial direction D and thereby effect a movement of the drawbar 8 from the advanced releasing position to the retracted locking position. In the embodiment illustrated in Figs 1 and 2, the piston member 50 is configured to move the actuating member 13 in said first axial direction D by exerting an axially directed pulling force on it. As an alternative, the piston member 50 could be configured to move the actuating member 13 in said first axial direction D by exerting an axially directed pushing force on it. The actuating member 13 is rotatable in relation to the piston member 50 together with the spindle 2, whereas the piston member 50 is configured to remain stationary in the housing 3 when the spindle 2 is rotated in relation to the housing 3.

The piston member 50 is preferably concentric with the actuating member 13 and the spindle 2, but it would also be possible to use a piston member 50 which has its centre axis arranged parallel to the centre axis of the spindle 2 but somewhat eccentrically in relation to it. In order to save space in the longitudinal direction of the clamping device 1, the piston member 50 is with advantage arranged to overlap the actuating member 13, at least partly.

The actuating member 13 is preferably configured to assume a self-locking axial position on the spindle 2 when the drawbar 8 has been forced into the retracted locking position under the effect of the actuating member 13 and the motion transferring mechanism 30, so as to thereby allow the actuating member 13 to keep the drawbar 8 in the retracted locking position. Hereby, the piston member 50 only needs to exert a force on the actuating member 13 in connection with a tool changing operation when the spindle 2 is stationary and the drawbar 8 is to be moved from the retracted locking position to the advanced releasing position and then back to the retracted locking position. In the self-locking axial position, frictional forces between the actuating member 13 and parts of the motion transferring mechanism 30 and/or the spindle 2 that are in contact with the actuating member 13 prevent the actuating member from being axially displaced in a direction opposite to the first axial direction D.

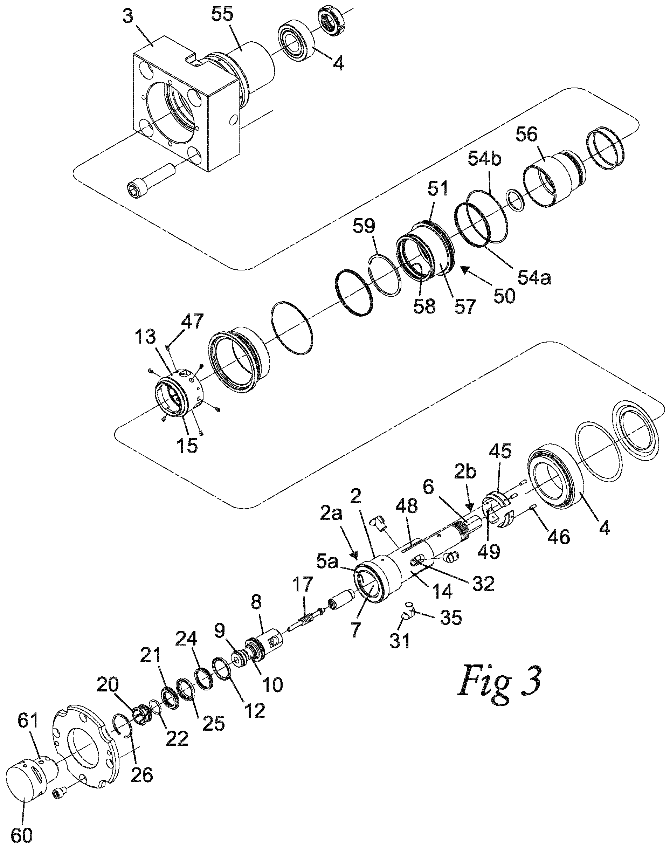

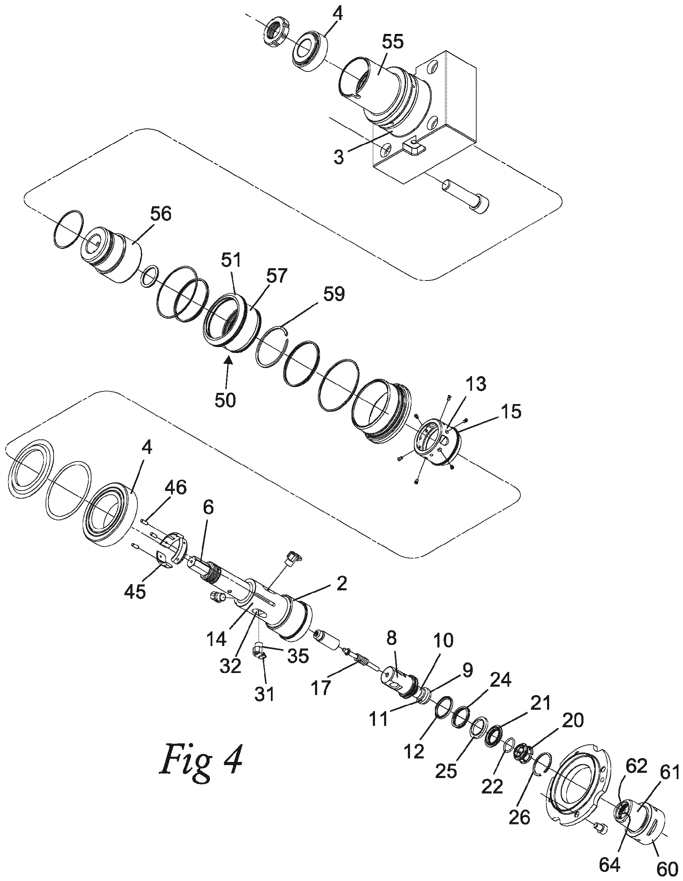

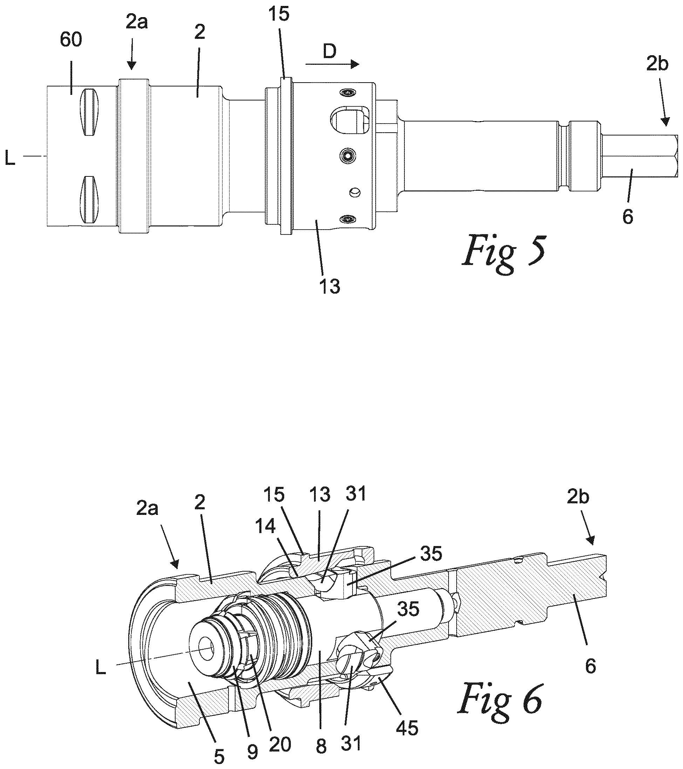

In the embodiments illustrated in Figs 1-13, the actuating member 13 has the form of a sleeve. In this case, the actuating member 13 is arranged around a peripheral wall 14 of the spindle 2 and slidably mounted to this peripheral wall so as to be axially moveable in relation to the spindle.

In the embodiment illustrated in Figs 1 and 2, the piston member 50 comprises an annular piston head 51 slidably received in a space 52 in the housing 3. The piston head 51 is preferably concentric with the actuating member 13 and extends around the spindle 2. The piston head 51 is configured to divide said space 52 into a first hydraulic chamber 53a on a first side of the piston head and a second hydraulic chamber 53b on an opposite second side of the piston head. In this case, the piston member 50 is moveable in the above-mentioned first axial direction D by feeding of hydraulic fluid into the first hydraulic chamber 53a in order to effect a movement of the actuating member 13 is this first axial direction D and in a second axial direction, opposite to the first axial direction D, by feeding of hydraulic fluid into the second hydraulic chamber 53b. As an alternative, the clamping device 1 could comprise two hydraulically operated annular piston members, including a first piston member for moving the actuating member 13 in said first axial direction D and a second piston member for moving the actuating member 13 in said second axial direction.

Sealing rings 54a, 54b are arranged on opposite sides of the piston head 51, wherein a first sealing ring 54a is mounted in a groove in an outwardly facing surface on the piston head so as to be in sealing contact with a first wall 55 that delimits the above-mentioned space 52 in the housing 3 in radial direction outwards and a second sealing ring 54b is mounted in a groove in an inwardly facing surface on the piston head so as to be in sealing contact with a second wall 56 that delimits said space 52 in radial direction inwards.

In the embodiment illustrated in Figs 1 and 2, the piston member 50 comprises a sleeve-shaped piston stem 57 fixed to the piston head 51, wherein the piston member 50 is configured to exert the above-mentioned pulling or pushing force on the actuating member 13 through the piston stem 57. The piston stem 57 is preferably concentric with the actuating member 13 and extends around the spindle 2. The piston stem 57 delimits the first hydraulic chamber 53a in radial direction inwards, whereas the second hydraulic chamber 53b is delimited in radial direction inwards by the above-mentioned second wall 56. In the illustrated example, the second wall 56 extends into a gap provided between the inner surface of the piston stem 57 and the outer surface of the actuating member 13.

The piston stem 57 may be configured to exert the above-mentioned force on the actuating member 13 by acting on an annular external protuberance 15 provided on the outer side of the actuating member 13. In the embodiment illustrated in Figs 1 and 2, an annular internal protuberance 58 is provided on the inner side of the piston stem 57 and a lock ring 59 is fixed to the piston stem 57 on the inner side thereof, wherein the lock ring 59 and the internal protuberance 58 are spaced apart in the axial direction of the piston stem 57. The external protuberance 15 on the actuating member 13 is received with play in a gap formed between the internal protuberance 58 and the lock ring 59. In this case, axial force is transferred from the piston member 50 to the actuating member 13 via the lock ring 59 when the piston member 50 moves the actuating member in the first axial direction D and via the internal protuberance 58 when the piston member 50 moves the actuating member in the opposite direction.

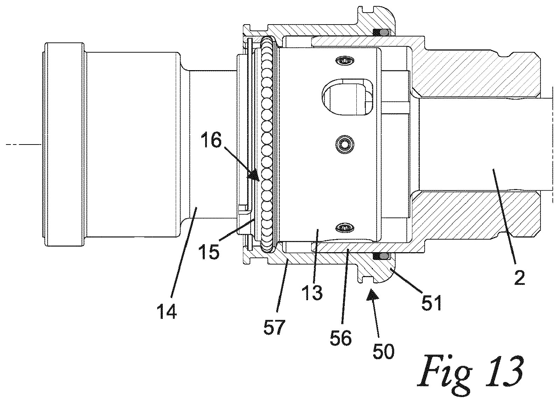

It is important to avoid frictional forces between the actuating member 13 and the piston member 50 during the machining operations or at least keep such frictional forces as low as possible, due to the fact that the actuating member 13 rotates together with the spindle 2 at high speed during machining operations, whereas the piston member 50 remains stationary. In the embodiment illustrated in Figs 1 and 2, frictional forces at the interface between the piston member 50 and the actuating member 13 are avoided by having a small play in radial and axial direction between the actuating member and the piston member at the coupling formed by the above-mentioned co-operating parts 15, 58, 59 of the actuating member and the piston member. As an alternative, such frictional forces may be avoided by having the piston member 50 connected to the actuating member 13 via a rolling bearing 16, preferably in the form of a ball bearing, arranged between the outer side of the actuating member 13 and the inner side of the piston stem 57, as illustrated in Fig 13. In the embodiment illustrated in Fig 13, a rolling bearing 16 in the form of a ball bearing is arranged on an annular external protuberance 15 on the actuating member 13.

In the embodiment illustrated in Figs 1 and 2, a release spring 17, preferably in the form of a helical compression spring, is mounted in a space inside the spindle 2 and configured to act on the rear end of the drawbar 8 in order to urge the drawbar towards the advanced releasing position. The drawbar 8 is moveable, under the effect of the actuating member 13 and the motion transferring mechanism 30, from the advanced releasing position to the retracted locking position against the action of a spring force from this release spring 17. The release spring 17 is with advantage arranged along the longitudinal axis L, behind the drawbar 8.

The motion transferring mechanism 30 may be designed in many different manners. In the embodiment illustrated in Figs 1-12, the motion transferring mechanism comprises three wedges 31, which are spaced apart in the circumferential direction of the spindle 2. Each wedge 31 is received in a respective aperture 32 that extends radially through the above-mentioned peripheral wall 14 of the spindle 2, wherein the wedges 31 are configured to press the drawbar 8 towards the retracted locking position when they are pressed radially inwards in the associated apertures 32. Each wedge 31 comprises a first pressure receiving surface 33 (see Figs 7 and 9) which faces outwards from the spindle 2, and the actuating member 13 is on its inner side provided with a first pressure applying surface 34 which faces inwards for contacting the first pressure receiving surface 33 on each wedge. The first pressure applying surface 34 has a radial distance to the longitudinal axis L that increases as seen in the above-mentioned first axial direction D. The first pressure applying surface 34 is configured to press the wedges 31 radially inwards in the apertures 32 by pressing against the first pressure receiving surface 33 on each wedge when the actuating member 13 is moved in the first axial direction D.

The illustrated motion transferring mechanism 30 also comprises three wedge engagement members 35, which project radially from the drawbar 8 into a respective one of the apertures 32 and which are fixed to the drawbar so as to be moveable along the longitudinal axis L together with the drawbar. Thus, a movement of a wedge engagement member 35 along the longitudinal axis L will cause a corresponding movement of the drawbar 8. Each wedge engagement member 35 is in contact with one of the wedges 31. In order to facilitate the assembly of the clamping device 1, the illustrated wedge engagement members 35 are formed as separate elements mounted in a respective radial recess in the drawbar 8. However, the wedge engagement members 35 may as an alternative be mounted to the drawbar 8 in any other suitable manner or formed in one piece with the drawbar.

The motion transferring mechanism 30 may comprise any suitable number of wedges 31 and associated wedge engagement members 35 arranged to extend through a corresponding number of apertures 32 in the peripheral wall 14 of the spindle 2. The apertures 32 and the associated wedges 31 and wedge engagement members 35 are preferably evenly distributed in the circumferential direction of the peripheral wall 14.

Each wedge engagement member 35 has a slide surface 36 which faces towards the front end 2a of the spindle 2, and each aperture 32 has a slide surface 37 which faces towards the rear end 2b of the spindle. Furthermore, each wedge 31 has a first wedge surface 38 which faces towards the rear end 2b of the spindle and a second wedge surface 39 which faces towards the front end 2a of the spindle, wherein these first and second wedge surfaces 38, 39 approach each other in a radial direction towards the longitudinal axis L. The first wedge surface 38 of each wedge 31 is in contact with the slide surface 36 of the associated wedge engagement member 35 and the second wedge surface 39 of each wedge is in contact with the slide surface 37 of the associated aperture 32. When the wedges 31 are pressed radially inwards in the apertures 32 by the actuating member 13, the first and second wedge surfaces 38, 39 of each wedge 31 will slide and press against the corresponding slide surfaces 36, 37 of the associated wedge engagement member 35 and aperture 32 and thereby force the drawbar 8 to move towards the retracted locking position.

The first pressure applying surface 34 and the first pressure receiving surfaces 33 are preferably inclined in relation to the longitudinal axis L by such an angle α (see Fig 11) that the wedges 31 will keep the actuating member 13 in a self-locking axial position on the spindle 2 when the drawbar 8 has been forced into the retracted locking position under the effect of the actuating member 13 and the wedges 31.

Each wedge 31 may also comprise a second pressure receiving surface 43 which faces outwards from the spindle 2, wherein the actuating member 13 on its inner side is provided with a second pressure applying surface 44 which faces inwards for contacting the second pressure receiving surface 43 on each wedge. The second pressure applying surface 44 has a radial distance to the longitudinal axis L that increases as seen in the first axial direction D. The second pressure applying surface 44 and the second pressure receiving surfaces 43 are inclined in relation to the longitudinal axis L by an angle β (see Fig 11) which is larger than the above-mentioned angle α. The first and second pressure applying surfaces 34, 44 and the first and second pressure receiving surfaces 33, 43 are arranged consecutively on the actuating member 13 and on each wedge 31, respectively, such that, upon a movement of the actuating member 13 in the first axial direction D, the second pressure applying surface 44 is configured to slide and press against the second pressure receiving surface 43 on each wedge during an initial first phase of the movement, whereupon the first pressure applying surface 34 is configured to slide and press against the first pressure receiving surface 33 on each wedge during a subsequent second phase of the movement.

Each wedge engagement member 35 further comprises a release pressure receiving surface 40 which faces towards the rear end 2b of the spindle 2, and the actuating member 13 comprises a release pressure applying surface 41 which faces towards the front end 2a of the spindle. The release pressure applying surface 41 of the actuating member 13 is configured to come into contact with the release pressure receiving surfaces 40 of the wedge engagement members 35 when the actuating member 13 is moved in the above-mentioned second axial direction, to thereby allow the actuating member to exert a forwardly directed axial force on the drawbar 8 via the wedge engagement members 35 during a final phase of the movement of the drawbar from the retracted locking position to the advanced releasing position.

In the embodiment illustrated in Figs 1-12, supporting segments 45 and pins 46 are arranged between the actuating member 13 and the spindle 2. The supporting segments 45 are arranged on the inner side of the actuating member 13 and are fixed to the actuating member by means of screws 47, as illustrated in Fig 12. The supporting segments 45 support the wedges 31 such that they are kept in place and are prevented from being dislocated with respect to the actuating member 13 in the circumferential direction. Each pin 46 is accommodated partly in a longitudinal groove 48 in the spindle 2 and partly in a recess 49 in a supporting segment 45. The pins 46 are slidably received in the longitudinal grooves 48 on the outer side of the spindle 2 and thereby allowed to move axially together with the actuating member 13 when the actuating member is axially moved in relation to the spindle. The pins 46 prevent mutual rotation between the actuating member 13 and the spindle 2. Consequently, when the spindle 2 is rotated, the actuating member 13 will rotate together with the spindle 2 with the same rotational speed and cannot be displaced in relation to the spindle 2 in the circumferential direction.

When a tool holder 60 is to be clamped to the spindle 2, the tool holder shank 61 is inserted into the mounting portion 7 of the bore 5 with the spindle 2 kept in a stationary position and the drawbar 8 positioned in the advanced releasing position, as illustrated in Figs 2 and 11. Hereby, the head portion 9 of the drawbar is received in the engagement bore 62 in the tool holder shank 61 and the engagement groove 64 in the tool holder shank 61 is positioned on the outside of the engagement flanges 27 of the engagement members 20. Thereupon, hydraulic oil is fed into the first hydraulic chamber 53a in order to move the piston member 50 in the first axial direction D and thereby achieve a corresponding axial movement of the actuating member 13. During a first phase of this axial movement of the actuating member 13, the second pressure applying surface 44 on the actuating member 13 will slide and press against the second pressure receiving surfaces 43 on the wedges 31. Hereby, the wedges 31 will be pressed radially inwards and the drawbar 8 will be axially displaced towards the retracted locking position. Due to the relatively steep inclination β of the second pressure applying and receiving surfaces 44, 43, the wedges 31 will initially move inwards rather fast, which results in a relatively quick displacement of the drawbar 8. The relatively steep angle β is advantageous since the initial displacement of the drawbar 8 does not require much force. The first and second pressure applying surfaces 34, 44 and the first and second pressure receiving surfaces 33, 43 are so arranged that when the actuating member 13 has been moved such a distance that the second pressure applying surface 44 has passed the second pressure receiving surface 43 and the first pressure applying surface 34 reaches the first pressure receiving surface 33, i.e. at the transition between these respective surfaces, the drawbar 8 has almost reached its final destination at the rear end of the bore 5. Hence, for the final clamping phase, in which a large force is beneficial, the first pressure applying and receiving surfaces 34, 33 are active. In this phase, a relatively large movement of the actuating member 13 will result in a very small radial displacement of the wedges 31, and an even smaller axial displacement of the drawbar 8, which consequently will provide a force-amplifying effect that will make it possible for the drawbar 8 to pull the tool holder shank 61 with a large force into firm engagement with the spindle 2. Furthermore, the small inclination α of the first pressure applying and receiving surfaces 34, 33 will provide a self-locking effect and make sure that the clamping device will remain in the clamped state without requiring any additional locking means. Hereby, the hydraulic pressure on the piston member 50 may be released when the drawbar 8 has reached the retracted locking position.

When a tool changing operation is to be performed and the tool holder 60 is to be released from the spindle 2, the rotation of the spindle 2 is stopped and hydraulic oil is fed into the second hydraulic chamber 53b in order to move the piston member 50 in the second axial direction, opposite to the first axial direction D, and thereby achieve a corresponding axial movement of the actuating member 13. When the actuating member 13 is subjected to a sufficient force in said second axial direction by the piston member 50, the self-locking frictional engagement between the first pressure applying surface 34 on the actuating member 13 and the first pressure receiving surfaces 33 on the wedges 31 will be released, whereupon the actuating member 13 is moveable in relation to the spindle 2 in the second axial direction under the effect of the piston member 50. When the actuating member 13 is moved in this direction, the spring force exerted by the release spring 17 on the rear end of the drawbar 8 will push the drawbar axially towards the advanced releasing position. Hereby, the wedge engagement members 35 will exert a force on the wedges 31 and press them radially outwards. When the actuating member 13 has been moved a certain distance in the second axial direction, the release pressure applying surface 41 on the actuating member 13 will come into contact with the release pressure receiving surfaces 40 on the wedge engagement members 35, which will allow the actuating member 13 to exert an axial force on the drawbar 8 via the wedge engagement members 35 that will push the outer end of the head portion 9 of the drawbar 8 against a surface 65 in the engagement bore 62 in the tool holder shank 61 and thereby release the tool holder shank 61 from the spindle 2.

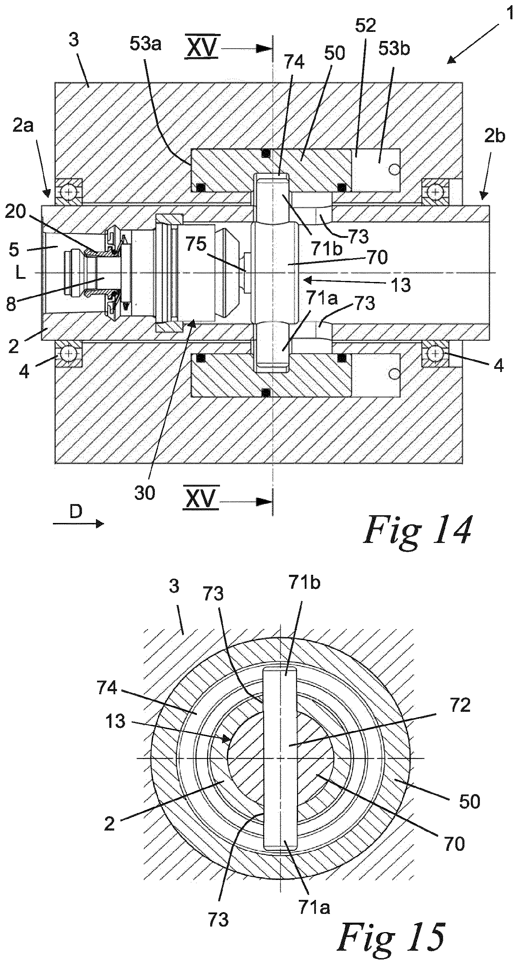

In the embodiment illustrated in Figs 14 and 15, the actuating member 13 comprises a base part 70 with a circular cross-sectional shape, which is slidably received in the bore 5 inside the spindle 2 so as to be moveable in relation to the spindle in the axial direction thereof. In this case, the actuating member 13 also comprises two arms 71a, 71b, which are fixed to the base part 70 so as to be moveable in relation to the spindle 2 in the axial direction thereof together with the base part 70. The arms 71a, 71b project in radial direction from the base part 70 on opposite sides thereof. In the illustrated example, the arms 71a, 71b constitute opposite end sections of a transverse pin 72, which is fixed to and extends across the base part 70 perpendicularly to the centre axis of the base part. Apertures 73 for the arms 71a, 71b extend radially through a peripheral wall of the spindle 2 on opposite sides of the spindle, wherein each arm 71a, 71b extends across a respective one of these apertures 73. The apertures 73 are elongated and extend in the axial direction of the spindle 2 so as to allow the arms 71a, 71b to move in relation to the spindle 2 in the axial direction thereof.

In the embodiment illustrated in Figs 14 and 15, the piston member 50 is slidably received in a space 52 inside the housing 3 of the clamping device 1 and configured to divide this space 52 into an annular first hydraulic chamber 53a on a first side of the piston member 50 and an annular second hydraulic chamber 53b on an opposite second side of the piston member. The outer end of each arm 71a, 71b is received with play in an annular groove 74 provided on the inner side of the piston member 50, to thereby allow the piston member 50 to exert a pushing force on the actuating member 13 and also allow the actuating member 13 to rotate in relation to the piston member 50 together with the spindle 2. When hydraulic fluid is fed into the first hydraulic chamber 53a, the piston member 50 will push the arms 71a, 71b and thereby the entire actuating member 13 rearwards in the above-mentioned first axial direction D. When hydraulic fluid is fed into the second hydraulic chamber 53b, the piston member 50 will push the arms 71a, 71b and thereby the entire actuating member 13 forwards in the opposite direction. In this embodiment, the actuating member 13 is configured to act on the motion transferring mechanism 30 via a projection 75, which is fixed to the base part 70 and projects from a front side of the base part towards the front end 2a of the spindle 2. The motion transferring mechanism 30 included in the clamping device 1 according to Figs 14 and 15 is of the type described in US 6 370 995 B1. Thus, the design and functioning of this motion transferring mechanism 30 is described in closer detail in US 6 370 995 B1.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A clamping device for releasably holding a tool holder shank, the clamping device (1) comprising:
- a housing (3);
- a spindle (2) rotatably mounted inside the housing (3) and having a front end, a rear end and a bore (5) which intersects the front end and extends rearwardly therefrom, wherein a mounting portion (7) for receiving the tool holder shank (61) is provided at a front end of the bore (5);
- a drawbar (8) slidably mounted inside the bore (5) so as to be reciprocally moveable in the bore along a longitudinal axis (L) thereof between an advanced releasing position and a retracted locking position;
- engagement members (20) arranged around the drawbar (8) at a front end thereof, wherein the engagement members (20), under the effect of a movement of the drawbar (8) from the advanced releasing position to the retracted locking position, are moveable from a first position, in which the engagement members (20) allow the tool holder shank (61) to move into and out of said mounting portion (7) of the bore (5), to a second position, in which the engagement members (20) are in locking engagement with the tool holder shank (61) and keep it secured to the spindle (2);
- an actuating member (13) arranged inside the housing (3), wherein the actuating member (13) is slidably mounted to the spindle (2) so as to be moveable in relation to the spindle (2) in the axial direction thereof; and
- a motion transferring mechanism (30) arranged inside the housing (3), wherein the motion transferring mechanism (30) is mounted to the spindle (2) and configured to transfer an axial movement of the actuating member (13) in a first axial direction (D) in relation to the spindle (2) into a movement of the drawbar (8) from the advanced releasing position to the retracted locking position,
**characterized in:**
- **that** the clamping device (1) further comprises a hydraulically operated annular piston member (50) for moving the actuating member (13) axially in relation to the spindle (2), the piston member (50) extending around the spindle (2), wherein the piston member (50) is slidably mounted in a space inside the housing (3) so as to be hydraulically moveable axially in relation to the housing in order to allow the piston member (50) to exert a pulling or pushing force on the actuating member (13) in said first axial direction (D) and thereby effect a movement of the drawbar (8) from the advanced releasing position to the retracted locking position; and
- **that** the actuating member (13) is rotatable in relation to the piston member (50) together with the spindle (2).

2. A clamping device according to 1, **characterized in that** the actuating member (13) is configured to assume a self-locking axial position on the spindle (2) when the drawbar (8) has been forced into the retracted locking position under the effect of the actuating member (13) and the motion transferring mechanism (30), so as to thereby keep the drawbar (8) in the retracted locking position.

3. A clamping device according to claim 1 or 2, **characterized in that** the piston member (50) comprises an annular piston head (51) slidably received in a space (52) in the housing (3), wherein a first hydraulic chamber (53a) is formed in this space on a first side of the piston head (51), the piston member (50) being moveable in said first axial direction (D) by feeding of hydraulic fluid into this first hydraulic chamber (53a).

4. A clamping device according to claim 3, **characterized in that** a second hydraulic chamber (53b) is formed in said space (52) on an opposite second side of the piston head (51), the piston member (50) being moveable in a second axial direction, opposite to the first axial direction (D), by feeding of hydraulic fluid into the second hydraulic chamber (53b).

5. A clamping device according to claim 3 or 4, **characterized in that** the piston member (50) comprises a sleeve-shaped piston stem (57) fixed to the piston head (51), wherein the piston member (50) is configured to exert said pulling or pushing force on the actuating member (13) through the piston stem (57).

6. A clamping device according to claim 5, **characterized in that** the piston stem (57) is configured to delimit the first hydraulic chamber (53a) in radial direction inwards.

7. A clamping device according to any of claims 1-6, **characterized in that** the actuating member (13) has the form of a sleeve, wherein the actuating member (13) is arranged around a peripheral wall (14) of the spindle (2) and slidably mounted to this peripheral wall so as to be axially moveable in relation to the spindle.

8. A clamping device according to claim 7 in combination with claim 5 or 6, **characterized in that** an annular external protuberance (15) is provided on the outer side of the actuating member (13), wherein the piston stem (57) is configured to exert said pulling or pushing force on the actuating member (13) by acting on this external protuberance (15).

9. A clamping device according to claim 8, **characterized in:**
- **that** an annular internal protuberance (58) is provided on the inner side of the piston stem (57);
- **that** a lock ring (59) is fixed to the piston stem (57) on the inner side thereof, wherein the lock ring (59) and the internal protuberance (58) are spaced apart in the axial direction of the piston stem (57); and
- **that** the external protuberance (15) on the actuating member (13) is received with play in a gap formed between the internal protuberance (58) and the lock ring (59).

10. A clamping device according to any of claims 7-9, **characterized in:**
- **that** the motion transferring mechanism (30) comprises two or more wedges (31) spaced apart in the circumferential direction of the spindle (2), each wedge (31) being received in a respective aperture (32) that extends radially through said peripheral wall (14) of the spindle (2), wherein the wedges (31) are configured to press the drawbar (8) towards the retracted locking position when they are pressed radially inwards in the associated apertures (32);
- **that** each wedge (31) comprises a first pressure receiving surface (33) which faces outwards from the spindle (2);
- **that** the actuating member (13) on its inner side is provided with a first pressure applying surface (34) which faces inwards for contacting the first pressure receiving surface (33) on each wedge, the first pressure applying surface (34) having a radial distance to the longitudinal axis (L) that increases as seen in said first axial direction (D); and
- **that** the first pressure applying surface (34) is configured to press each wedge (31) radially inwards in the associated aperture (32) by pressing against the first pressure receiving surface (33) on each wedge when the actuating member (13) is moved in said first axial direction (D).

11. A clamping device according to claim 10, **characterized in that** the first pressure applying surface (34) and the first pressure receiving surfaces (33) are inclined in relation to the longitudinal axis (L) by such an angle α that the wedges (31) will keep the actuating member (13) in a self-locking axial position on the spindle (2) when the drawbar (8) has been forced into the retracted locking position under the effect of the actuating member (13) and the wedges (31).

12. A clamping device according to claim 11, **characterized in:**
- **that** each wedge (31) comprises a second pressure receiving surface (43) which faces outwards from the spindle (2);
- **that** the actuating member (13) on its inner side is provided with a second pressure applying surface (44) which faces inwards for contacting the second pressure receiving surface (43) on each wedge (31), the second pressure applying surface (44) having a radial distance to the longitudinal axis (L) that increases as seen in said first axial direction (D);
- **that** the second pressure applying surface (44) and the second pressure receiving surfaces (43) are inclined in relation to the longitudinal axis (L) by an angle β which is larger than the angle α; and
- **that** the first and second pressure applying surfaces (34, 44) and the first and second pressure receiving surfaces (33, 43) are arranged consecutively on the actuating member (13) and on each wedge (31), respectively, such that, upon a movement of the actuating member (13) in the first axial direction (D), the second pressure applying surface (44) is configured to slide and press against the second pressure receiving surface (43) on each wedge during a first phase of the movement and the first pressure applying surface (34) is configured to slide and press against the first pressure receiving surface (33) on each wedge during a subsequent second phase of the movement.

13. A clamping device according to any of claims 7-12, **characterized in that** the drawbar (8), under the effect of the actuating member (13) and the motion transferring mechanism (30), is moveable from the advanced releasing position to the retracted locking position against the action of a spring force from a release spring (17) arranged inside the spindle (2).

14. A clamping device according to any of claims 1-13, **characterized in that** a rolling bearing (16), preferably in the form of a ball bearing, is arranged between the actuating member (13) and the piston member (50).

15. A clamping device according to any of claims 1-14, **characterized in that** the piston member (50) is concentric with the actuating member (13).
